# EUROPEAN PATENT SPECIFICATION

(11) **EP 1 749 414 B1**
(45) Date of publication and mention of the grant of the patent: **12.09.2007**
(21) Application number: 04734831.3
(22) Date of filing: 26.05.2004
(51) Int. Cl.: H04Q 7/38, H04Q 7/28

(54) **SERVERS AND METHODS FOR CONTROLLING GROUP MANAGEMENT**
SERVER UND VERFAHREN ZUR STEUERUNG DER VERWALTUNG VON GRUPPEN
SERVEURS ET PROCEDES POUR CONTROLER LA GESTION DE GROUPES

(43) Date of publication of application: 07.02.2007
(73) Proprietor: TELEFONAKTIEBOLAGET LM ERICSSON (publ), 164 83 Stockholm (SE)
(72) Inventor: CASTRO CASTRO, Fabian, E-28039 Madrid (ES); SANCHEZ HERRERO, Juan Antonio, 28004 Madrid (ES); WALKER, John, Michael, E-28045 Madrid (ES)
(74) Representative: Tonscheidt, Andreas
(86) International application number: PCT/EP2004/005630
(87) International publication number: WO 2005/120112

(56) References cited:
- WO-A1-01/03402
- US-A1- 2002 147 845
- US-A1- 2002 150 091
- US-A1- 2003 187 992
- US-A1- 2004 019 912

## Description

### FIELD OF THE INVENTION

The present invention generally relates to management of groups of users in a group server, such as creating, deleting, and modifying groups, or becoming members thereof. In particular, the present invention relates to the management in a Group and List Management Server of groups contact lists and access lists for users who are subscribers of a telecommunication network. Still more in particular, the invention is suitable for use in a Push-to-talk technology preferably running over a wireless system.

### BACKGROUND

Nowadays, users of most of the telecommunications systems and newer technologies are familiar with the handling of user's groups, user's contact lists and user's access lists. Contact lists had been mainly used for e-mail services where an e-mail can be sent to a number of destination users in a simple and fast manner. Different sorts of groups are more and more used with the development and massive usage of the Internet network where users are quite familiar with the so-called chat groups and instant-talk groups. As these former categories become more and more popular, needs for blocking undesirable accesses to users terminals justify access lists to turn up. The access lists being traditionally intended as blacklists to prevent accesses from a number of originating users, or as white lists to include the only allowed originating accesses.

Currently, Push-to-talk technologies are found to be an interesting facility to offer for social sectors having a limited, and likely sort, number of partner communicators, such as children, elderly people, or other social groups with a need to be commonly connected with fellows, like a group of co-operating fishermen might be. A Push-to-talk system allows a user to quickly contact with a destination user or group of users by just pressing one button in a quite simple user's terminal. This technology is quite cheap specially when based on half-duplex radio access technology as the traditional VHF radio technology. Presently, with world-wide distribution of the wireless systems, the development of a Push-to-talk technology over wireless systems seems to be an attractive emerging technological couple with great expectations especially in America where wireless systems are commonly known as 'cellular systems'.

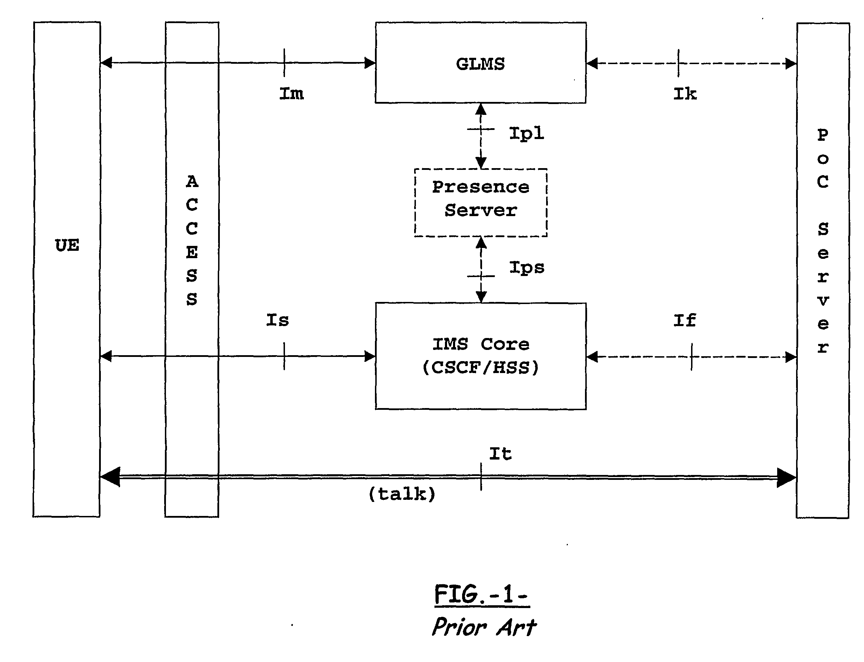

Thereby, new standardisation bodies turn up to deal with technical specifications to facilitate the introduction of Push-to-talk over Cellular (commonly known as PoC) system. The current Push-to-talk over Cellular (PoC) specifications stipulate mechanisms for managing and handling user groups and user contact lists related to services, such as instant group talk, ad-hoc instant group talk and chat group talk may be. Moreover, these mechanisms are intended to run over the newer wireless systems as specified, and as still developed, under the 3^{rd} Generation Partnership Project (commonly known as 3GPP). In particular, PoC technology and related standards are intended to inter-work with an IP Multimedia Subsystem (generally known as IMS) included in a core network of a mobile network operator (hereinafter referred to as MNO), and specified by technical specifications (TS) 3GPP TS 23.228 and 3GPP TS 24.229. More precisely, several standardisation documents are developed for this PoC technology though, for the purpose of identifying the closest art to the present invention, "Push-to-talk over Cellular (PoC); Architecture; PoC Release 1.0" is found to be the most significant, and which basic architectural elements are depicted in Fig. 1.

Thus, Fig. 1 illustrates basic components of a currently specified PoC system as well as other components that may be foreseeable to be connected though not enough investigated yet, as the case is for the 'Presence Server' and corresponding interfaces 'Ipl' and 'Ips'.

The IMS included in the core network of a mobile network operator, which was already introduced above and is also called 'IMS Core', includes a number of SIP proxies and SIP registrars. The IMS Core, amongst others, performs the following functions: routing of Session Initiation Protocol (SIP) signalling between the user, or rather between the user equipment, and a PoC Server; terminating the SIP compression from the terminal; carrying out the authentication and authorization of the user; maintaining the registration state and the SIP session state; and reporting to the charging system. For the sake of simplicity and for the purpose of the invention, the present description refers hereinafter to the user equipment (UE) representing the user side rather than, and independently of, being the user, the user's equipment, or terminal, originator or destination of an action. A Group and List Management Server (GLMS) is a server provided in a PoC system that PoC users may use to manage groups, contact lists and access lists. A PoC Server, on the other hand, contains PoC services and performs functions such as, amongst others, policy control for accessing to groups, access control, and group session handling.

Apart from these entities, Fig. 1 also illustrates a number of interfaces for connection and inter-working of such entities under operation. Some of these interfaces, which may be significant for the purpose of the present invention, are explained following this.

The interface "Is" supports the SIP signalling between the user side (UE) and the IMS Core of a network operator to allow the communication of a user with other users. The interface "Im" is intended to support HTTP/XML protocols, and is provided for communication between the Group and List Management Server (GLMS) and the user side (UE) in order to manage groups, contact lists and access lists as well as a so-called Do-not-Disturb function.

Apart from the entities and interfaces commented above, and for the purpose of the present invention, some concepts are clarified following this, and harmonising with the specifications "Push-to-talk over Cellular; User Requirements; PoC Release 1.0" and "Push-to-talk over Cellular; List Management and Do-not-Disturb; PoC Release 1.0".

Thus, a group is a set of users together with its profile specific attributes such as, for example, display name, group identity, timestamp, talk session type, and membership. The group members may belong to the same or to different operator domains. That is, PoC users who are members of a group, as well as the PoC user owning the group, may be subscribers of a same or different network operator. The group is used for an easy session establishment as well as for defining a session access policy. Each group is uniquely identified by its SIP-URI.

The group identity, which is used for group talk on the Is interface between the UE and IMS core, is generated by the GLMS when the user creates the group through the Im interface between the UE and GLMS, and said group identity complies with the specification of a SIP URI in IETF RFC 3261. For the purpose of group identification and group addressing, both chat groups and instant-talk groups need a unique alphanumeric identifier, namely a SIP URI. The group identity, as currently specified, includes an indication of the operator domain wherein the group has been created, and a group name. The group name may, for example, include a name of a company or department for professional use. The GLMS generates a unique SIP URI for the group upon its creation by a user, and returns said group name to the user side (UE) in a successful response to a corresponding request.

A contact list is used by the end user as a means for organizing the identities of other end users, groups, and contact lists. A contact list may be used to address users when initiating PoC communication. A contact list is also uniquely identified by a SIP URI. This SIP URI is generated by the GLMS when the user creates the contact list.

It is worthwhile to notice that a contact list can only be used by its owner whereas a group can be used by any of the group members, both contact list and group identified by its respective contact list identity and group identity.

Different types of groups and contact lists may exist. In particular, user (UE) defined groups and related policies are defined over the Im interface via an HTTP/XML protocol in the GLMS; these groups can be considered static. Apart from these static groups, other application defined groups, which are dynamically created, may also exist having a number of users involved, such as for example an ad-hoc chat group. However, these sorts of dynamically generated groups are not stored in the GLMS but rather in the application, the PoC server or a specific application server (AS) for instance.

Regarding the management operations defined over the Im interface, the PoC specification defines user management operations in the GLMS server over the specific Im interface, in a similar manner as self-provisioning operations, whereby a user can create its own groups, contact lists and access list, for example. Operations that a user can currently perform over this Im interface are defined in the specification "Push-to-talk over Cellular; List Management and Do-not-Disturb; PoC Release 1.0" and explained following this.

A first set of operations on the Im interface includes those operations intended to operate on contact list management for allowing users to directly create, update, retrieve and delete a contact list. Within this set, one might also consider those operations intended to operate on contact list policies whereby, as creating a contact list, the creator becomes its owner. Only the owner of the contact list is allowed to manipulate it. When a user (UE) stores or adds a new member identity through the Im interface in a contact list, the GLMS validates that the new member's SIP URI or TEL URL is syntactically valid.

A second set of operations on the Im interface includes those operations intended to operate on group management for allowing the users to directly create, update, retrieve and delete a group. Also in this set, one may consider the operations intended to operate on group policies whereby, as creating a group, the creator becomes its owner. Only the owner of the group is allowed to manipulate it and, as for the contact lists, the GLMS validates that the new group member's SIP URI or TEL URL is syntactically correct.

A third set of operations on the Im interface includes those operations intended to operate on access list management, where an access list may be used by a user to control incoming talk session requests from other users or groups. An access list may contain identities of other users and groups, and may also include flags such as for a 'Do-not-Disturb' function. The access list is mainly used during traffic, namely during service execution, but it is not used to decide what user management operations can be performed on either a contact list or a group. As for groups and contact lists, one may consider within this third set those operations intended to operate on access list policies whereby, as creating an access list, the creator becomes its owner. Only the owner of the access list is allowed to manipulate it. When the user stores or adds a new identity in the access list, the GLMS validates that the identity's SIP URI or TEL URL is syntactically valid.

The PoC Architecture as illustrated in Fig. 1 and explained above only considers a group management server such as the GLMS, which is preferred for static groups whereas the PoC server is preferred for dynamically generated groups, to handle and manage group related information. As previously explained, the operations that a user can perform against the GLMS server over the Im interface, concerning a group, contact list or even an access list, are subject to simple and straightforward policies that are actually either set by the user or by the GLMS without taking into account the user's access capabilities, user's privacy and, even, the user existence, and this is a drawback aiming the present invention. The information that is being added or changed in a group management server is not validated, but for being syntactically correct, so that this management, in principle, allows for a malicious user to mischievously create groups and contact lists of unknown users that simply occupy GLMS memory without successful operation, and thus resulting in a worse performance. Of course, similar erroneous results my be achieved by simple human mistakes.

Moreover, with the present architectural solution, a malicious user can create groups that require a certain access capability whilst its members do not have such corresponding user's access capability. For instance, a GSM user can create a group or contact list for GPRS users where the members actually don't have such a GPRS access. In this respect, other limitations turn up that may be significant for business between the PoC system operator and the wireless network operator. For instance, pre-paid subscribers of the wireless network operator may be not allowed to create cheap tariff groups.

Furthermore, the PoC specifications only consider that a user may do operations against a GLMS server over the Im interface but do not consider how a GLMS can be updated as a result of a change in the user's state since the Im interface is not currently arranged to this end. For example, a user may wish to be temporarily deactivated from a group whenever the user roams internationally. The currently existing architecture provides no mechanism for the GLMS to be aware of such user willing.

Still further, provided that a user does not consent on being a member of certain sorts of groups, for political, ethical, or other reasons, the existing PoC architecture can give support for said user to establish policies in the GLMS in order to prevent in said GLMS his or her inclusion in such sort of groups. For instance, US 2002/0150091 addresses the group management and provides for an application in a group management server which allows the users to create groups, define and modify access rights and send notifications about new groups to users. This group management application holds information on authorized group management users and what they are allowed to do. That is, all the information concerning the user privacy and consent is centralized in the group management server. Another exemplary teaching where relevant data are centralized may be found in US 2004/0019912 which addresses the management of presence services in a Presence server. This Presence server holds all the necessary information regarding the presence of users connected to such Presence server and information related to how the sessions must be handled. For this purpose, the Presence server may obtain the presence-related information from a Home Subscriber Server. However, this is a very inefficient defence of user's privacy since a plurality of GLMS, world-wide distributed, are expected to exist, and the user would be obliged to introduce such privacy policies in all the existing GLMS. In fact, this is not that easy unless the user is a PoC user in all the PoC systems owning said existing GLMS, what is also a drawback aiming the present invention.

An object of the present invention is the provision of an improved management system to solve the above drawbacks in the management of groups, contact lists and access lists for users, whereby the users' access capabilities, privacy, and existence can be validated in a more efficient manner.

A further object of the present invention is that this improved management system allows groups, contact lists and access lists for users being updated as a result of a change in a user's state, the user being the owner or a member of said groups, contact lists and access lists.

A still further object of the present invention is that this improved management system fits as much as possible and with minimized impacts the current Push-to-talk over Cellular architecture.

### SUMMARY OF THE INVENTION

The above objects are accomplished in accordance with the present invention by the provision of the group server of claim 1, the subscriber server of claim 6, and the co-operating methods of claims 11 and 16, all arranged for providing an improved management of groups, contact lists and access lists for users, whereby the users' access capabilities, privacy, and existence can be validated in a more efficient manner, and being updated as a result of a change in a user's state. In particular, servers' structure and interfaces may be used in a Push-to-talk over Cellular architecture without significant impacts in other network entities and interfaces.

A group server for managing groups, contact lists or access lists of users generally includes a first protocol front-end for communication with a user, and for managing at least one element selected from: a user group, a user contact lists and a user access list. In a system where the user is a subscriber of a network operator, the management is improved in accordance with a first aspect of the invention by also including in the group server:
- a second protocol front-end suitable for communication with a subscriber server of the network operator for the purpose of correlating group profiles in the group server with user profiles in the subscriber server, the group profile including policies to be fulfilled by group members, and the user profile including policies to be fulfilled by groups for which the user authorizes to be a member; and
- a group evaluator module for checking whether the user, depending on group and user profiles, is allowed to, or barred from, creating, deleting, modifying, or being a member of at least one element selected from: a user group, a user access list and a user contact list.

In order to improve the modularity of different elements included in the group server of the present invention, the second protocol front-end in the group server may preferably comprise a protocol handler module for dealing with a protocol suitable for supporting group-related operations applying to at least one element selected from: a user group, a user access list and a user contact list, and for at least one user. In this respect, other modular components may be advantageously provided to better distribute the different activities of this second protocol front-end, such as a message parser module for dealing with group related operations, and a support function module for controlling local operations.

Different advantages may be obtaining depending on different data characterizing groups, contact lists, and access lists. These characterizing data are organized as group profiles, where each group profile is applicable to at least one element selected from: a user group, a user access list and a user contact list. Moreover, each group profile may be arranged for comprising: a group identifier, a group owner, a number of data for each user member in the group that includes a user identifier and user policies, and group specific information that includes policies for the group.

A subscriber server of a network operator is a network entity holding subscriber data, and may hold as well registration status and session status, for subscribers of the network operator, and is the entity generally providing the subscriber data for said subscribers to a network entity wherein the subscriber is a user. Therefore, the subscriber server is provided with a first protocol front-end for communication with the network entity. The subscriber server in accordance with a second aspect of the invention also includes:
- a second protocol front-end for communication with a group server of user groups, user contact lists and user access lists, and for the purpose of correlating user profiles in this subscriber server with group profiles in the group server, the group profile including policies to be fulfilled by group members, and the user profile including policies to be fulfilled by groups for which the user authorizes to be a member; and
- a user evaluator module for checking whether the user, depending on group and user profiles, is allowed to, or barred from, creating, deleting, modifying, or being a member of at least one element selected from: a user group, a user access list and a user contact list.

As for the above group server, and in order to improve the modularity of different elements included in the subscriber server of the present invention, this second protocol front-end in the subscriber server may preferably comprise a protocol handler module for dealing with a protocol suitable for supporting group-related operations applying to at least one element selected from: a user group, a user access list and a user contact list, and for at least one user. As for the group server, other modular components may be advantageously provided as well for the second protocol front-end in the subscriber server, such as a message parser module for dealing with group-related operations, and a support function module for controlling local operations.

In order to maintain an advantageous co-operation with the above group server, each user profile in the subscriber server is arranged for comprising: a user identifier; user data under network operator premises; generic group data that include policies applicable to all groups for the user; and specific group data that includes policies and group identifier for each group. Further advantages may be obtained if each user profile in the subscriber server is arranged for comprising: subscription data under network operator premises; and common policies applicable to all groups for this user subscription.

A method of controlling the management of user groups, user contact lists or user access lists in a group server for a user, wherein the groups, contact lists and access lists include a number of users and each user is subscriber of a network operator, traditionally includes a step of receiving from the user an operation request intended to operate on at least one element selected from: a user group, a user access list and a user contact list, the operation being selected from a set of operations for: creating, deleting, and modifying the at least one selected element. In accordance with a third aspect of the present invention, this method also includes the steps of:
- correlating a group profile corresponding to the at least one selected element in the group server with at least one user profile obtainable from a subscriber server of the network operator, the group profile including policies to be fulfilled by group members, and the user profile including policies to be fulfilled by groups for which the user authorizes to be a member; and
- checking whether the user, depending on group and user profiles, is allowed to, or barred from, creating, deleting, modifying, or being a member of the at least one selected element.

Preferably, the step of correlating a group profile with at least one user profile in this method includes a step of submitting towards the subscriber server an operation request selected from a group of operations intended to respectively: create or delete a group or list for the user; include or withdraw a user in a group or list; and update policies for at least one group or list. Moreover, the step of correlating a group profile with at least one user profile in this method may also include a step of receiving from the subscriber server information obtainable from a user profile and further usable during the step of checking whether the user is allowed to, or barred from, carrying out the requested operation. Furthermore, this method may be complemented with a step of informing from the group server to the subscriber server about the result of any operation carried out on a user by the group server in connection with a group or list.

This new method may offer additional advantages as further comprising a step of providing user identifiers under network operator premises upon a members retrieval operation request received from the subscriber server.

Currently, a subscriber server of a network operator contributes to the management in a group server of user groups, user contact lists and user access lists for a user with a method of controlling this management for users that are subscribers of the network operator. This method merely includes a step of holding subscriber data for each user in the subscriber server of the network operator which may be used during call establishment. In order to accomplish the objects of the invention, and in accordance with a fourth aspect of this invention, the method in the subscriber server of the network operator also includes the steps of:
- correlating at least one user profile in the subscriber server with a group profile obtainable from the group server, the group profile including policies to be fulfilled by group members, and the user profile including policies to be fulfilled by groups for which the user authorizes to be a member; and
- checking whether the user, depending on group and user profiles, is allowed to, or barred from, creating, deleting, modifying, or being a member of at least one element selected from: a user group, a user access list and a user contact list.

Aligned with a corresponding method in the group server, and for the sake of coherence and unity, the step of correlating at least one user profile with a group profile in the subscriber server of this method may include a step of receiving from the group server an operation request selected from a group of operations intended to respectively: create or delete a group or list for the user; include or withdraw a user in a group or list; and update policies for at least one group or list. Moreover, the step of correlating at least one user profile with a group profile may also include a step of submitting towards the group server information obtainable from the user, obtainable through network entities and via network protocols, for updating the user profile.

For similar advantageous purposes as for the method in the group server commented above, this method in the subscriber server may also comprise a step of submitting towards the group server a member updating operation request for updating status of members in a group or list according to users network status, as well as a step of submitting towards the group server a members retrieval operation request for retrieving members of a group or list identified by a common identifier.

### BRIEF DESCRIPTION OF DRAWINGS

The features, objects and advantages of the invention will become apparent by reading this description in conjunction with the accompanying drawings, in which:

**FIG. 1** shows a basic diagram that includes entities and interfaces of a prior art architecture as specified under Push-to-talk over Cellular technical specifications.

**FIG. 2** illustrates a nowadays-preferred embodiment of architectural components and interfaces in accordance with the invention for managing groups, contact lists, and access lists **for** users who are subscribers of a network operator.

**FIG. 3** shows a flow sequence describing a currently preferred embodiment for validating the execution of a management operation performed between a user and a group server, the validation carried out between the group server and a subscriber server of the network operator.

**Fig. 4** shows another flow sequence describing a currently preferred embodiment for updating groups, contact lists and access lists for users as a result of a change in a user's state, the user being the owner or a member of said groups, contact lists and access lists.

**Fig. 5** presents a basic component diagram of a group server for managing groups, contact lists, and access lists for users who are subscribers of a network operator in accordance with a currently preferred embodiment.

**Fig. 6** illustrates a basic component diagram of a subscriber server of the network operator for validating the execution of a management operation performed between a user and a group server in accordance with a currently preferred embodiment.

### DETAILED DESCRIPTION OF PREFERRED EMBODIMENTS

The following describes some preferred embodiments for offering an improved management of groups, contact lists and access lists for users, whereby the users' access capabilities, privacy, and existence can be validated in a more efficient manner, as well as for updating the management as a result of a change in a user's state.

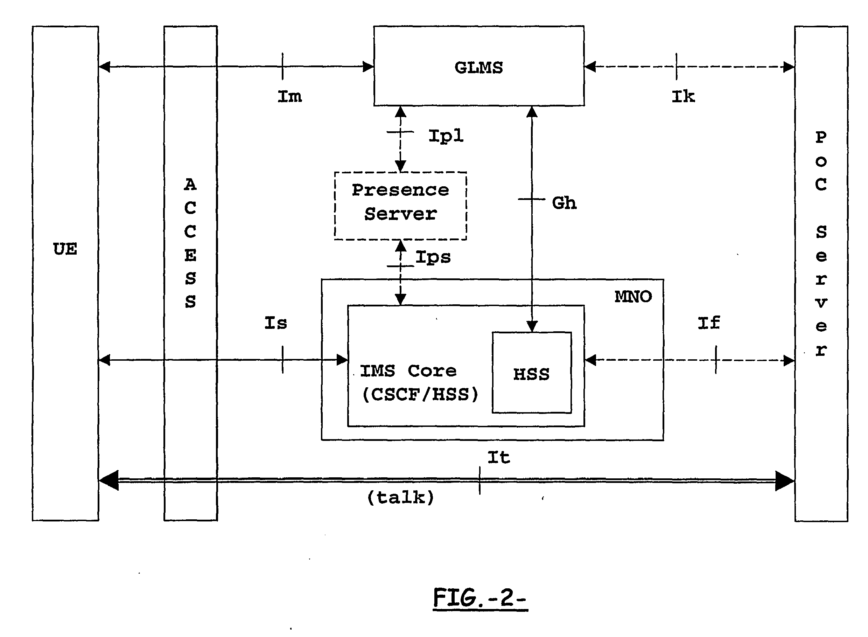

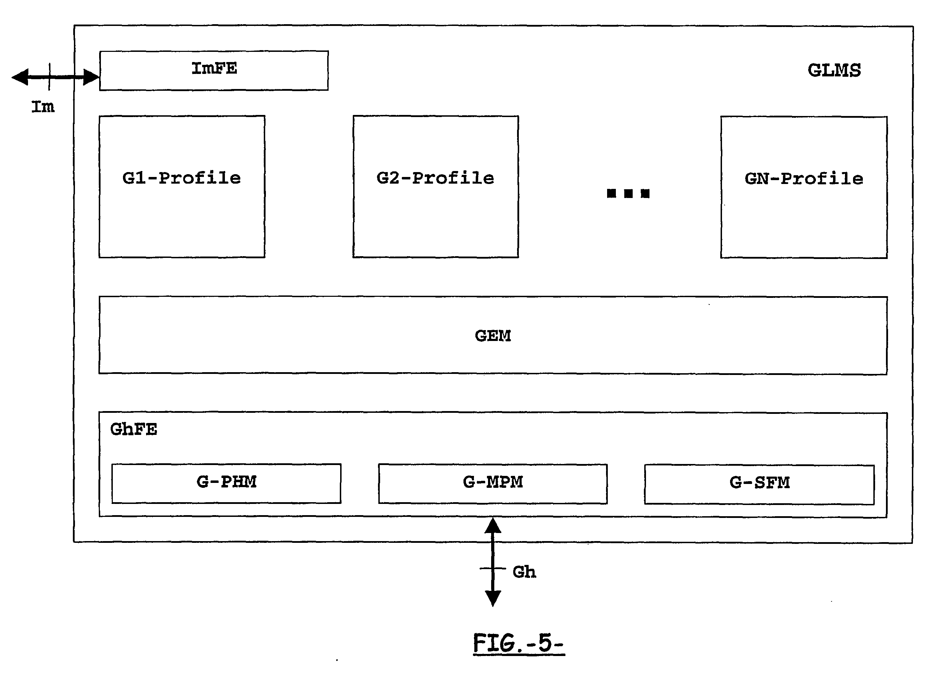

In accordance with a first aspect of the present invention illustrated in Fig. 2, there is provided a group server (GLMS) arranged for correlating group profiles available in said group server for the management of groups, contact lists and access lists for users (UE) with user profiles available in a subscriber server (HSS) of the network operator (MNO) where the users are subscribed to. Therefore, there is provided a new interface 'Gh' between the group server and the subscriber server for exchanging group profile data, user profile data, or combinations thereof, in order to evaluate whether a user can be included or not in a given group or contact list taking into account relevant policies. To this end, the group server illustrated in Fig. 5 includes a number of group profiles (G1-Profile, G2-Profile, GN-Profile), each group profile having at least a minimum set of group profile data harmonising with, and suitable for interacting with, corresponding sets of user profile data in the subscriber server (HSS) in order to allow a group evaluator module (GEM) in the group server to make a decision on whether a group, contact list or access list for a user (UE) can be operated, for example created, modified or a new member added, according to a user (UE) request.

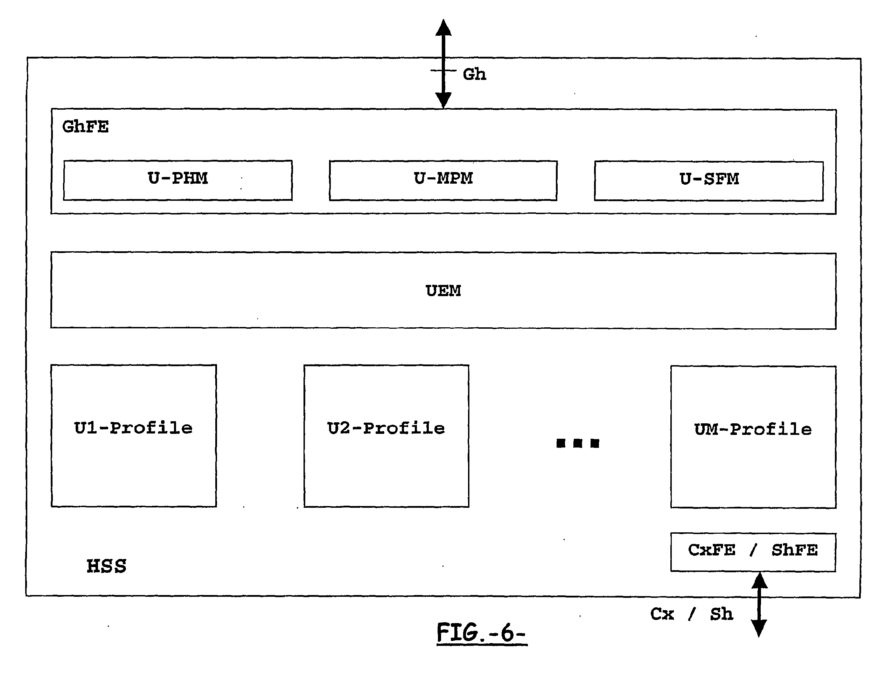

In accordance with a second aspect of the present invention, there is provided a subscriber server (HSS) of the network operator (MNO) arranged for correlating user profiles available in said subscriber server (HSS), where the users are subscribed to, with group profiles available in a group server (GLMS) for the management of groups, contact lists and access lists for users (UE). The subscriber server (HSS) is connected with the group server (GLMS), as commented above and illustrated in Fig. 2, by a new so-called Gh interface for exchanging group profile data, user profile data, or combinations thereof, in order to evaluate whether a user can be included or not in a given group or contact list, or whether a group, contact list or access list for a user (UE) can be operated, for example created, modified or a new member added, taking into account relevant policies. To this end, the subscriber server illustrated in Fig. 6 includes a number of user profiles (U1-Profile, U2-Profile, UM-Profile), each user profile having at least a minimum set of user profile data harmonising with, and suitable for interacting with, corresponding sets of group profile data in the group server (GLMS) in order to allow a user evaluator module (UEM) in the subscriber server to make a decision on whether a user (UE) can be included or not in a given group or contact list, for example. In particular, the subscriber server (HSS) may be included in the IMS Core or may be a separate entity where the user (UE) can set user's preferences and policies to apply for groups, contact lists and access lists.

In a second embodiment of the invention, not shown in any drawing, the Gh interface is also supported between the subscriber server (HSS) of the network operator and the PoC server in order to allow also the latter to carry out the improved management of groups dynamically generated in accordance with the invention. Both group and list management server (GLMS) and PoC server are thus equivalently considered as the group server described in the present specification. Moreover, in a third embodiment of the invention not shown in any drawing, both group and list management server (GLMS) and PoC server are elements integrated in a unique entity connected with the subscriber server (HSS) by the Gh interface.

Thanks to the correlation between the group profiles available in, and obtainable from, the group server (GLMS, PoC server) and the user profiles available in, and obtainable from, the subscriber server (HSS), a user (UE) can establish, as part of its user profile (U1-Profile, U2-Profile, UM-Profile), restrictions, criteria or policies to the type of groups that the user authorizes to be member of. On the other hand, conditions, criteria, or policies that have to be fulfilled by group members of a certain group are included as part of the group information defined in a certain group profile (G1-Profile, G2-Profile, GN-Profile).

In a currently preferred embodiment of the present invention both group server and subscriber server are given a respective evaluator module (GEM, UEM) for making decisions on whether a user (UE) can be included or not in a given group or contact list, or on whether a group, contact list or access list for a user (UE) can be operated, for example created, or modified.

The way criteria or policies are distributed between said modules for decision-making may be subject of different embodiments. A first distribution might be such that, upon receiving a request from a user (UE) to create a new group of a certain group type with a number of given users, the group server selects between two possible further steps of either sending the group profile for such group type to the subscriber server, for the user evaluator module (UEM) make the decision by taking into account the users involved, or collecting the respective users profiles from the subscriber servers involved, for the group evaluator module (GEM) making the decision. This selective method may depend on the given users to be members of the group and on whether they belong or not to the same operator domain, that is, either just one or a plurality of subscriber servers are involved.

For example an evaluation on whether a user, who is candidate to be member of certain group, complies or not with the requirements of that group may be located in the group evaluator module (GEM) of the group server if the subscriber server provides upon request relevant information obtained from the user profile. However, such evaluation may be also performed by the user evaluator module (UEM) located in the subscriber server (UEM) if the group server provides the subscriber server with relevant information obtained from the group profile. These different embodiments may be applied, for example, to a case where a GPRS access is required to all users of a certain group.

A user is thus advantageously allowed to establish at any time in its user profile policies, or general rules, applicable to all groups, or to certain types of groups. For example, a user may establish in its user profile (U1-Profile, U2-Profile, UM-Profile) a restriction for groups with adult content. The activities carried out by the user in order to establish policies that affect the consent of the user to be a member of a group are not only allowed before the group is created, but also after the user has become member of the group. For example, a user may establish that for a certain type of groups, or particular groups, his or her preferences cannot be changed without his or her permission. Therefore, the user communicates such preferences or policies to the subscriber server (HSS) via the Is interface, provided that the subscriber server is included in the IMS Core part of a network operator (MNO), or via other interface arranged to this end.

The Gh interface, apart from being used for correlating user profile and group profile, allows mutual notification between the group server (GLMS, PoC server) and the subscriber server (HSS) of the network operator (MNO) of any significant change on a respective group or user profile that might require a correlation. The Gh interface also supports mutual interrogations apart from the notification, depending on whether the significant change takes place in the group server or in the subscriber server, and depending on whether the final decision is going to be taken by the group evaluator module (GEM) or by the user evaluator module (UEM).

In accordance with a currently preferred embodiment, a minimum set of profile data, per group or list, that may be useful in the group server (GLMS, PoC server) for interaction with user profile data in the subscriber server (HSS) for achieving the objects of the invention, is listed in Table I following this. In addition, a minimum set of user data required in the subscriber server (HSS), per user or subscriber, for interaction with group profile data in the group server (GLMS, PoC server) for achieving the objects of the invention, is listed in Table II following this. In particular, other profile data required by a specific supporting technology, PoC or others, might be included in addition and without departing from the inventive concept of the invention.

**Table I**

| |
|---|
| Group Identifier |
| Operator Code of GLMS (GLMS Address/name) |
| Administrator |
| Username Administrator |
| Operator of Username Administrator |
| User identifier for the administrator in operator network |
| Username Administrator |
| Role and permissions of Administrator |
| Member 1 |
| Username Member 1 |
| Operator of Username Member 1 |
| User identifier for the Member 1 in operator network |
| Username Member 1 |
| Role and permissions of Member 1 |
| ... ... ... |
| Member N |
| Username Member N |
| Operator of Username Member N |
| User identifier for the Member N in operator network |
| Username Member N |
| Role and permissions of Member N |
| Group Specific Information |
| Usage and Description |
| Identifier for the Group in operator network |
| Policies to be used for the group |

**Table II**

| |
|---|
| User Identifier |
| User/Subscription Specific Data under network operator premises |
| Generic Group Data |
| Common policies to all groups for this user/subscription |
| Policies to be used over all groups for this user |
| User and/or operator Blacklisted groups |
| Specific Group Data |
| Group Identifier 1 |
| Operator Code of Group 1 |
| Group 1 identifier |
| Username of user in Group 1 |
| Policies for user in Group 1 |
| ... ... ... |
| Group Identifier N |
| Operator Code of Group N |
| Group N identifier |
| Username of user in Group N |
| Policies for user in Group N |

The previous respective sets of minimum group profile data and user profile data that enable interaction between the group server (GLMS, PoC server) and the subscriber server (HSS) can be written in standardised XML schemas and supplied via standardised templates. It is worthwhile to notice that both sets of minimum group profile data and user profile data present intersection points with data that are common or useful to both group server (GLMS, PoC server) and subscriber server (HSS). Thus, the communication between group server (GLMS, PoC server) and subscriber server (HSS) allows both entities to interrogate each other about the running of operations on groups or lists as well as to notify each other of the result of these operations, and to resolve any conflict derived from data not matching the user or group profiles involved.

In short, this communication between group server (GLMS, PoC server) and subscriber server (HSS) is carried out over the Gh interface and requires means to initiate and terminate all communication over the Gh interface, apply user and group related criteria, and resolve policy disputes due to the membership of a user in a group.

Regarding the use of user profile data in the subscriber server, before a user can create a group or can be included as member of a certain group or list in the group server, or before any other operation is carried out on the user in relation with a group, the subscriber server preferably evaluates, firstly, if the user's Subscription Specific Data allows the operation to be carried out; secondly, if the user's Generic Group Data allows the operation; and, thirdly, if the user's Specific Group Data allows the operation.

On the one hand, user and group profile data evaluation is required to check if a candidate complies with group and user requirements. An example of this could be a group where it is mandatory for all its members to have GPRS access. In this case, before a user is added to the group, the group server (GLMS, PoC server) checks with the subscriber server (HSS) whether or not a user has a GPRS subscription before being added to the group. Another example is the case of a prepaid user that wishes to create a group to get benefit from special rates. The group server asks for permission to the subscriber server on whether the user is allowed to create such a group. If a policy on the subscriber server only allows special rate groups to be created by subscribers with premium rate contracts, then, the user evaluator module (UEM) in the subscriber server (HSS) denies this operation back to the group server (GLMS, PoC server).

On the other hand, a group can impose a set of characteristics to be fulfilled by all group members. That is, user and group data evaluation is required before a user is added to a group or list, in order to check if that user complies with the group requirements. For example, as correlating group-related requirements in the group profile with user's subscription specific data in the user profile, one may encounter that an age value required to join a certain group is to be older than eighteen years whereas the age attribute stored in the user profile reveals that the age of the user is seventeen. In a situation like this, either the group evaluator module (GEM) or the user evaluator module (UEM), after correlation of user and group profiles, arrive to a conclusion to deny such user being a member of such group.

As already mentioned above, the user profile also comprises data applicable to all groups, such as blacklisted groups, or general policies to be applicable to all groups. This information may be also part of the evaluation process and preferably checked before than particular policies. Apart from that, a further evaluation relates with specific group data where the user states policies applicable per group. This information may be preferably checked once a user is member of a group and when executing some operations such as deletion of the user in the group, or updating policies or parameters for the user.

Regarding the Gh interface, there is a number of currently preferred operations of a first set of operations that are submitted from the group server (GLMS, PoC server) towards the subscriber server (HSS) in accordance with the invention.

A first operation in this first set may be "Group and List Creation request", on which reception the user evaluation module (UEM) in the subscriber server (HSS) evaluates if the user is allowed to create such type of group or list, becoming the group or list owner, and under what policies or additional criteria, if any. The subscriber server eventually answers with a permission or deny result.

A second operation in this first set may be "Group and List Deletion request", on which reception the user evaluation module (UEM) in the subscriber server (HSS) evaluates if the user is allowed to delete the entire group or list and under what policies or additional criteria, if any. The subscriber server eventually answers with a permission or deny result.

A third operation in this first set may be "Group and List Member Inclusion request", on which reception the user evaluation module (UEM) in the subscriber server (HSS) evaluates if the user can be included in a given group or list and under what policies or additional criteria, if any.

A fourth operation in this first set may be "Group and List Member Withdrawal request", on which reception the user evaluation module (UEM) in the subscriber server (HSS), as for a member inclusion operation commented above, evaluates if the user can be withdrawn from a given group or list and under what policies or additional criteria, if any.

A fifth operation in this first set may be "Group and List User Policies Update request", on which reception the user evaluation module (UEM) in the subscriber server (HSS) evaluates whether given policies or parameters for a user can be updated or not in a group or list, and under what policies or additional criteria, if any.

Regarding the policies or additional criteria to be evaluated preferably by the user evaluator module (UEM) in the subscriber server (HSS) upon reception of any operation request selected from the above operations to respectively create and delete a group or list, include and withdraw a member in an existing group or list, and update policies, preferences and other additional criteria for a user, both generic group policies and specific group policies, as appearing in the above Table II, are evaluated taking into account possibly different scenarios.

In a first scenario, the operation request is initiated by a user who is the member to be included in, or withdrawn from, a given group or list, or whose own policies and parameters are requested to be updated, and the user has got the administrator permission as indicated in the request received from the group server. The subscriber server may answer with a permission or deny result depending on the result of evaluating generic and specific group policies in the user evaluator module (UEM).

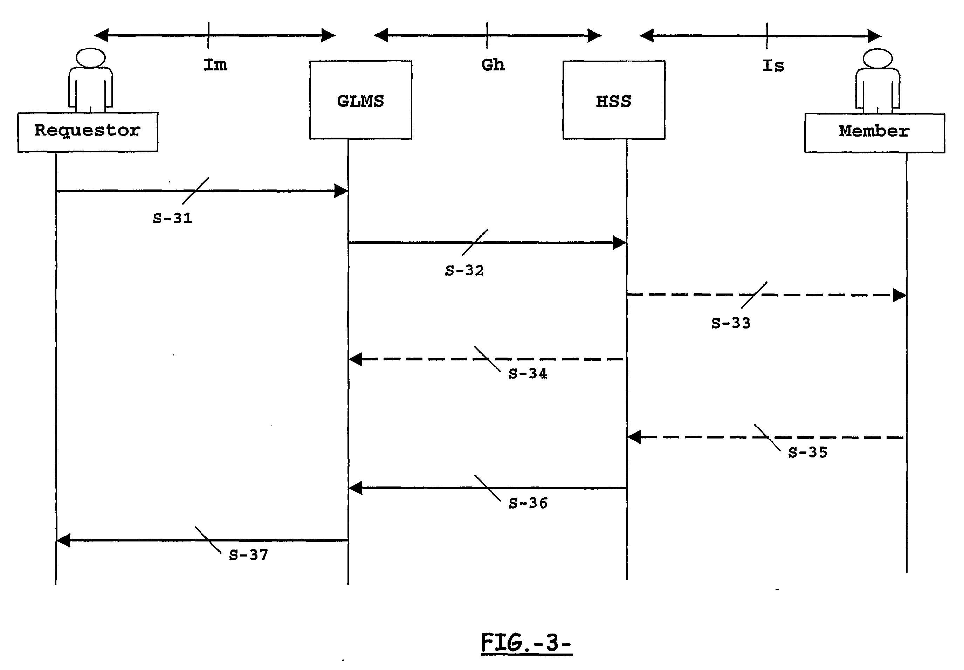

In a second scenario, the operation request is initiated by a user other than the one to be included in, or withdrawn from, a given group or list, or by a user other than the owner of policies and parameters requested to be updated. This scenario is illustrated in Fig. 3 wherein, upon reception of one of these operation requests (S-31) initiated by a user (Requestor) towards the group server (GLMS, PoC server), the group server detects that the requestor user (Requestor) is not the one (Member) on which the operation request is intended to act, and identifies which is the subscriber server (HSS) in charge of said user (Member). Then, the group server sends a corresponding operation request (S-32) towards the appropriate subscriber server (HSS) for the latter to obtain consent from the user (Member) object of operation. The subscriber server, then, may request (S-33) the user's (Member) consent, provided that such user had established this sort of preference in its user profile, or might skip such request for consent if the user (Member) had established a permission for such operation request for the type of given group or list. The subscriber server (HSS) may send back (S-34) to the group server (GLMS, PoC server) an indication of being waiting for a user's consent. Upon reception of the user's (Member) consent, if required, and after having checked all relevant generic and specific group policies in the user profile for the user, as illustrated in Table II, the subscriber server (HSS) answers (S-36) to the group server (GLMS, PoC server) with a permission or deny result depending on the result of evaluating generic and specific group policies in the user evaluator module (UEM). In addition or alternatively, the subscriber server (HSS) is arranged for submitting to the group server (GLMS, PoC server) the user profile (U1-Profile, U2-Profile, UM-Profile) data relevant for this evaluation, so that the group evaluator module (GEM) in the group server can make a final decision, and possibly save preferences from the new user (Member) in the corresponding group profile (G1-Profile, G2-Profile, GN-Profile), as illustrated in Table I.

Moreover, there is provided in an embodiment of the invention a number of operation results whereby the group server (GLMS, PoC server) informs the subscriber server (HSS) about the result of any operation performed on a user in connection with a group or list handling.

Apart from the first set of operations requests carried out through the Gh interface and triggered from a group server (GLMS, PoC server) towards a subscriber server (HSS) of a network operator (MNO), as described above, there is also a number of currently preferred operations of a second set of operations that are submitted from a subscriber server (HSS) of the network operator (MNO) towards a group server (GLMS, PoC server) in accordance with the invention.

A first operation in this second set may be "Group and List Member Retrieval request", which is sent from the subscriber server (HSS) towards the group server in order to retrieve members of a group or list, and related parameters. This operation may be useful for administrative purposes, such as checking consistency of user profiles with group profiles as well as other respective internal data. The operation is also useful to retrieve members of a group or contact list, identified by a common identifier, so that an incoming communication addressed to the group or contact list common identifier can be routed to each individual member.

A second operation in this second set may be "Group and List Member Updating request", which is triggered from a subscriber server towards a group server in order to update status of members of a group or list and related parameters depending on a user's network status. For instance, a user may wish to be temporary withdrawn from a group or contact list whilst the user is roaming abroad.

Moreover, a user (UE) may access a subscriber server (HSS) of the network operator where the user holds a subscription through network entities (IMS Core) and via network protocols like those represented by the Is interface, more precisely the so called Cx or Sh, for updating or modifying user data included in the above Table II. In this case, and provided that such modification or updating might affect existing groups or lists in a group server (GLMS, PoC server), the subscriber server (HSS) is preferably arranged in accordance with the invention for notifying the updated or modified user profile data to' the group server with an operation notification.

Furthermore, there is also provided in an embodiment of the invention a number of operation results whereby the subscriber server (HSS) informs the group server (GLMS, PoC server) about the result of any operation performed on a user in connection with a group or list handling.

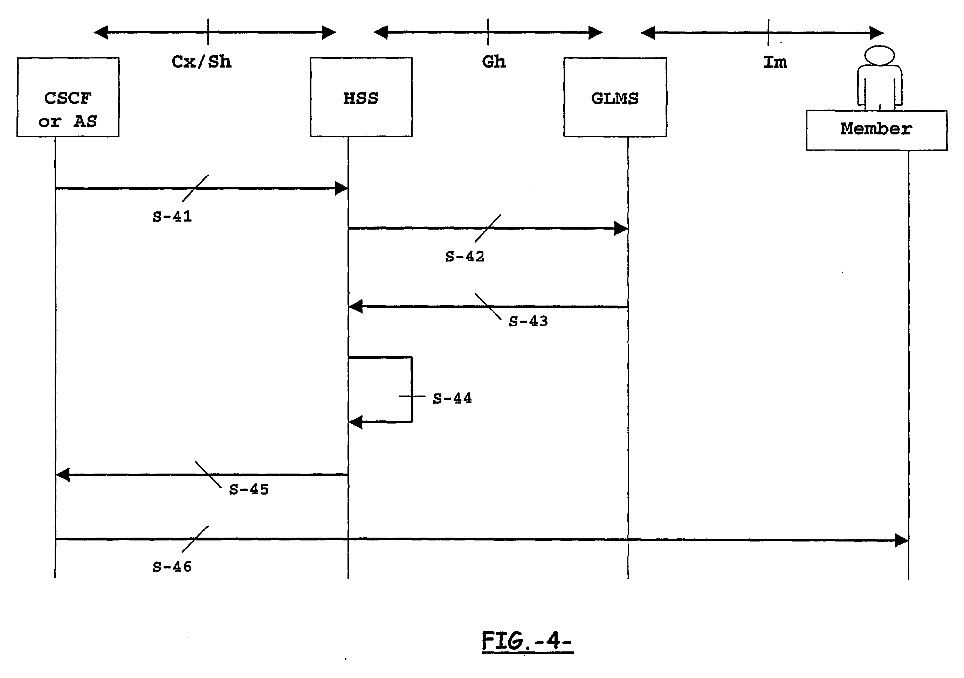

In this respect, Fig. 4 illustrates an embodiment of the invention where the subscriber server (HSS) triggers an operation request towards the group server (GLMS) through the Gh interface. A Network entity such as a Call Status Control Function (CSCF) or an Application Server (AS) is included in Fig. 4 for the only purpose of showing a possible use of some aspects of the invention. The sequence diagram in Fig. 4 starts when a network entity (CSCF, AS) indicates (S-41) to the subscriber server (HSS) of a network operator (MNO) that there is an incoming communication addressing a user identified as "Group". The subscriber server (HSS) finds such group identifier with help of user profile data as shown in Table II, and requests (S-42) to the group sever (GLMS) in charge of such group the retrieval of corresponding group members. The group server returns (S-43) the users that the given group consist of towards the subscriber server (HSS) so that the latter can check (S-44) the status of each member, for example, network status and session status, and can return (S-45) the members of the given "Group" to the network entity (CSCF, AS). Further, the network entity can address (S-46) each individual user (Member) included in the group.

Given that a number of different group servers may exist in connection with a particular subscriber server via the new Gh interface, these operation notifications can be sent to the group server concerned thanks to the user profile data "Operator Code of Group x" as shown in Table II. On the other hand, given that a number of different subscriber servers may exist in connection with a particular group server via the new Gh interface, the above operation requests, operation results, and operation notifications can be sent to the subscriber server concerned thanks to the group profile data "Operator of Username Member y" as shown in Table I.

From a structural point of view, the group server (GLMS, PoC server) and the subscriber server (HSS), as described above in accordance with some aspects of the invention, are illustrated in Fig. 5 and Fig. 6 respectively.

The group server (GLMS, PoC server) of Fig. 5 thus comprises a first protocol front-end (ImFE) for communicating with a user (UE) through the Im interface; a number of group profiles (G1-Profile, G2-Profile, GN-Profile), each group profile having group generic information such as its operator, its administrator and its members information, and group specific information such as group policies and other group parameters; a group evaluator module (GEM), already commented above, for making decisions in cooperation with a corresponding module in a subscriber server on whether the user (UE) can be included or not in a given group or list, or on whether a group, contact list or access list for a user (UE) can be operated, for example created, or modified; and a second protocol front-end (GhFE) for communicating with the subscriber server through the Gh interface proposed by the present invention and, more specifically, for correlating group profile data in this group server with user profile data in the subscriber server.

In particular, the second protocol front-end (GhFE) in the group server preferably includes a protocol handler module (G-PHM) for dealing with a specific protocol suitable for supporting the operation requests, operation results and operation notifications described above, such as HTTP or SIP protocols may be. The second protocol front-end (GhFE) may preferably include a message parser module (G-MPM) for dealing with specific operations received from the subscriber server, and for accommodating received data to internal requirements of the group evaluator module. Additionally, a support function module (G-SFM) might be provided as well for data collection, synchronization and controlling local operations in the group server.

The subscriber server of Fig. 6 comprises a first protocol front-end (CxFE, ShFE) for communicating with a user (UE) through the Is interface, or another suitable network protocol for communicating a subscriber (UE) of the network operator (MNO) with a subscriber server; a number of user profiles (U1-Profile, U2-Profile, UM-Profile), each user profile having user or subscription specific data, generic group data such as blacklisted groups for a user and common policies for all groups, and specific group data such as policies and username of a user in a group; a user evaluator module (UEM), already commented above, for making decisions in cooperation with a corresponding module in a group server; and a second protocol front-end (GhFE) for communicating with the group server through the Gh interface proposed by the present invention and, more specifically, for correlating group profile data in the group server with user profile data in the subscriber server.

As for the group server, the second protocol front-end (GhFE) in the subscriber server preferably includes a protocol handler module (U-PHM) for dealing with a specific protocol suitable for supporting the above operations, such as HTTP or SIP protocols may be. This second protocol front-end (GhFE) may preferably include a message parser module (U-MPM) for dealing with specific operations received from the group server, and for accommodating received data to internal requirements of the user evaluator module; and a support function module (U-SFM) for data collection, synchronization and controlling local operations in the subscriber server.

In a similar manner as both Group and List Management Server (GLMS) and Push-to-talk over Cellular server (Poc server) can be improved with the features of a group server in accordance with the invention and illustrated in Fig. 5, also both, the exemplary Home Subscriber Server (HSS) of a 3GPP based network, and a Home Location Register (HLR) of a GSM or GPRS network, can be improved with the features of the subscriber server in accordance with the invention and illustrated in Fig. 6. For example, provided that a Home Location Register incorporates the features of a subscriber server in accordance with the invention, network entities communicating (S-41) with this subscriber server (HLR) may be a Visitor Location Register (VLR) of a GSM architecture, or may be a Serving GPRS Support Node (SGSN) of a GPRS architecture.

Moreover, any subscriber server acting as a generic user profile register of a network operator, being included or not in an IMS core structure, and having subscriber data for subscribers of such network operator, may be arranged in accordance with the invention for correlating user profile data included in the subscriber server with corresponding group profile data in a group server through a Gh interface as described throughout this specification.

The invention is described above in respect of several embodiments in an illustrative and non-restrictive manner. Obviously, modifications and variations of the present invention are possible in light of the above teachings, and any modification of the embodiments that fall within the scope of the claims is intended to be included therein.

## Claims

1. A group server (GLMS, PoC server) suitable for managing groups, contact lists or access lists of users, each user (UE) being a subscriber of a network operator (MNO), the group server having:
- a first protocol front-end (ImFE) for communication with the user (UE) and suitable for managing at least one element selected from: user groups, user contact lists and user access lists;
and **characterized by** including:
- a second protocol front-end (GhFE) suitable for communication with a subscriber server (HSS) of the network operator (MNO) for the purpose of correlating group profiles (G1-profile, G2-profile, GN-profile) in the group server (GLMS) with user profiles (U1-profile, U2-profile, UM-profile) in the subscriber server (HSS), the group profile including policies to be fulfilled by group members, and the user profile including policies to be fulfilled by groups for which the user authorizes to be a member; and
- a group evaluator module (GEM) for checking whether the user, depending on group and user profiles, is allowed to, or barred from, creating, deleting, modifying, or being a member of at least one element selected from: a user group, a user access list and a user contact list.

2. The group server (GLMS, PoC server) of claim 1 wherein the second protocol front-end (GhFE) comprises a protocol handler module (G-PHM) for dealing with a protocol suitable for supporting group-related operations applying to at least one element selected from: a user group, a user access list and a user contact list, and for at least one user (Requestor, Member).

3. The group server (GLMS, PoC server) of claim 1 wherein the second protocol front-end (GhFE) comprises a message parser module (G-MPM) for dealing with group related operations, and a support function module (G-SFM) for controlling local operations.

4. The group server (GLMS, PoC server) of claim 1 wherein each group profile (G1-profile, G2-profile, GN-profile) is arranged for comprising: a group identifier; a group owner; a number of data for each user member in the group (Member 1, Member 2, Member N) that includes a user identifier and user policies; and group specific information that includes policies for the group.

5. The group server (GLMS, PoC server) of claim 1 wherein each group profile (G1-profile, G2-profile, GN-profile) is applicable to at least one element selected from: a user group, a user access list and a user contact list.

6. A subscriber server (HSS) holding subscriber data for a subscriber of a network operator (MNO), and suitable for providing the subscriber data to a network entity (IMS Core, CSCF, AS) wherein the subscriber is a user (UE), the subscriber server having:
- a first protocol front-end (C×FE, ShFE) for communication with the network entity (IMS Core, CSCF, AS);
and **characterized by** including:
- a second protocol front-end (GhFE) suitable for communication with a group server (GLMS, PoC server) of user groups, user contact lists or user access lists, and for the purpose of correlating user profiles (U1-profile, U2-profile, UM-profile) in the subscriber server (HSS) with group profiles (G1-profile, G2-profile, GN-profile) in the group server (GLMS, PoC server), the group profile including policies to be fulfilled by group members, and the user profile including policies to be fulfilled by groups for which the user authorizes to be a member; and
- a user evaluator module (UEM) for checking whether the user (UE), depending on group and user profiles, is allowed to, or barred from, creating, deleting, modifying, or being a member of at least one element selected from: a user group, a user access list and a user contact list.

7. The subscriber server (HSS) of claim 6 wherein the second protocol front-end (GhFE) comprises a protocol handler module (U-PHM) for dealing with a protocol suitable for supporting group-related operations applying to at least one element selected from: a user group, a user access list and a user contact list, and for at least one user (Requestor, Member).

8. The subscriber server (HSS) of claim 6 wherein the second protocol front-end (GhFE) comprises a message parser module (U-MPM) for dealing with group related operations, and a support function module (U-SFM) for controlling local operations.

9. The subscriber server (HSS) of claim 6 wherein each user profile (U1-profile, U2-profile, UM-profile) is arranged for comprising: a user identifier; user data under network operator premises; generic group data that include policies applicable to all groups for the user; and specific group data that includes policies and group identifier for each group.

10. The subscriber server (HSS) of claim 9 wherein each user profile (U1-profile, U2-profile, UM-profile) is arranged for further comprising: subscription data under network operator premises; and common policies applicable to all groups for this user subscription.

11. A method of controlling the management in a group server (GLMS, PoC server) of user groups, user contact lists or user access lists for a user (Requestor, Member), the groups, contact lists and access lists including a number of users, each user (Requestor, Member) being subscriber of a network operator (MNO), the method including a step of:
- receiving from the user (Requestor) an operation request (S-31) intended to operate on at least one element selected from: a user group, a user access list and a user contact list, the operation being selected from: creating, deleting, and modifying the at least one selected element;
and **characterized by** including the steps of:
- correlating a group profile (G1-profile, G2-profile, GN-profile) corresponding to the at least one selected element in the group server (GLMS, PoC server) with at least one user profile (U1-profile, U2-profile, UM-profile) obtainable from a subscriber server (HSS) of the network operator (MNO), the group profile including policies to be fulfilled by group members, and the user profile including policies to be fulfilled by groups for which the user authorizes to be a member; and
- checking whether the user, depending on group and user profiles, is allowed to, or barred from, creating, deleting, modifying, or being a member of the at least one selected element.

12. The method of claim 11 wherein the step of correlating a group profile with at least one user profile includes a step of submitting towards the subscriber server (HSS) an operation request selected from a group of operations intended to respectively: create or delete a group or list for the user; include or withdraw a user in a group or list; and update policies for at least one group or list.

13. The method of claim 12 wherein the step of correlating a group profile with at least one user profile includes a step of receiving (S-36) from the subscriber server (HSS) information obtainable from a user profile and usable in the step of checking whether the user (Requestor, Member) is allowed to, or barred from, carrying out the requested operation (S-31).

14. The method of claim 11 further comprising a step of informing to the subscriber server (HSS) about the result of any operation carried out on a user by the group server (GLMS, PoC server) in connection with a group or list.

15. The method of claim 11 further comprising a step of providing user identifiers under network operator premises upon a members retrieval operation request received from the subscriber server (HSS).

16. A method of controlling from a subscriber server (HSS) the management in a group server (GLMS, PoC server) of user groups, user contact lists and user access lists for a user (UE, Requestor, Member), the user being a subscriber of a network operator (MNO), the method comprising a step of:
- holding subscriber data for the user (UE, Requestor, Member) in the subscriber server (HSS) of the network operator (MNO);
and **characterized by** including the steps of:
- correlating at least one user profile (U1-profile, U2-profile, UM-profile) in the subscriber server (HSS) with a group profile (G1-profile, G2-profile, GN-profile) obtainable from the group server (GLMS, PoC server), the group profile including policies to be fulfilled by group members, and the user profile including policies to be fulfilled by groups for which the user authorizes to be a member; and
- checking whether the user (UE, Requestor, Member), depending on group and user profiles, is allowed to, or barred from, creating, deleting, modifying, or being a member of at least one element selected from: a user group, a user access list and a user contact list.

17. The method of claim 16 wherein the step of correlating at least one user profile with a group profile includes a step of receiving (S-32) from the group server (GLMS, PoC server) an operation request selected from a group of operations intended to respectively: create or delete a group or list for the user; include or withdraw a user in a group or list; and update policies for at least one group or list.

18. The method of claim 17 wherein the step of correlating at least one user profile with a group profile includes a step of submitting towards the group server (GLMS, PoC server) information obtainable from the user, through network entities (IMS Core, CSCF, AS) and via network protocols (Cx, Sh), for updating the user profile.

19. The method of claim 16 further comprising a step of submitting towards the group server (GLMS, PoC server) a member updating operation request for updating status of members in a group or list according to users network status.

20. The method of claim 16 further comprising a step of submitting towards the group server (GLMS, PoC server) a members retrieval operation request for retrieving members of a group or list identified by a common identifier.

## Patentansprüche

1. Gruppenserver (GLMS, PoC-Server), der zum Verwalten von Gruppen, Kontaktlisten oder Zugriffslisten von Benutzern geeignet ist, wobei jeder Benutzer (UE) ein Abonnent eines Netzbetreibers (MNO) ist, wobei der Gruppenserver Folgendes aufweist:
- eine erste Protokoll-Benutzeroberfläche (ImFE) zur Kommunikation mit dem Benutzer (UE) und die zum Verwalten mindestens eines Elements geeignet ist, das ausgewählt ist aus: Benutzergruppen, Benutzerkontaktlisten und Benutzerzugriffslisten;
und **gekennzeichnet dadurch, dass** er Folgendes beinhaltet:
- eine zweite Protokoll-Benutzeroberfläche (GhFE), die zur Kommunikation mit einem Abonnentenserver (HSS) des Netzbetreibers (MNO) zum Zwecke des Korrelierens von Gruppenprofilen (G1-Profil, G2-Profil, GN-Profil) in dem Gruppenserver (GLMS) mit Benutzerprofilen (U1-Profil, U2-Profil, UM-Profil) in dem Abonnentenserver (HSS) geeignet ist, wobei das Gruppenprofil von Gruppenmitgliedern zu erfüllende Richtlinien beinhaltet und das Benutzerprofil von Gruppen, für die der Benutzer autorisiert ein Mitglied zu sein, zu erfüllende Richtlinien beinhaltet; und
- ein Gruppenauswertungsmodul (GEM) zum Prüfen, ob dem Benutzer, in Abhängigkeit von Gruppen- und Benutzerprofilen, gestattet oder untersagt ist, mindestens ein Element zu erstellen, zu löschen oder zu modifizieren oder ein Mitglied mindestens eines Elements zu sein, wobei das Element ausgewählt ist aus: einer Benutzergruppe, einer Benutzerzugriffsliste und einer Benutzerkontaktliste.

2. Gruppenserver (GLMS, PoC-Server) nach Anspruch 1, wobei die zweite Protokoll-Benutzeroberfläche (GhFE) ein Protokoll-Handler-Modul (G-PHM) zum Handhaben eines Protokolls umfasst, das zum Unterstützen von gruppenbezogenen Vorgängen geeignet ist, die auf mindestens ein Element zutreffen, das ausgewählt ist aus: einer Benutzergruppe, einer Benutzerzugriffsliste und einer Benutzerkontaktliste, und für mindestens einen Benutzer (Anfordernder, Mitglied).

3. Gruppenserver (GLMS, PoC-Server) nach Anspruch 1, wobei die zweite Protokoll-Benutzeroberfläche (GhFE) ein Message-Parser-Modul (G-MPM) zum Handhaben von gruppenbezogenen Vorgängen und ein Unterstützungsfunktionsmodul (G-SFM) zum Steuern von lokalen Vorgängen umfasst.

4. Gruppenserver (GLMS, PoC-Server) nach Anspruch 1, wobei jedes Gruppenprofil (G1-Profil, G2-Profil, GN-Profil) dazu eingerichtet ist, Folgendes zu umfassen: eine Gruppenkennung; einen Gruppenbesitzer; eine Reihe von Daten für jedes Benutzermitglied in der Gruppe (Mitglied 1, Mitglied 2, Mitglied N), die eine Benutzerkennung und Benutzerrichtlinien beinhalten; und gruppenspezifische Informationen, die Richtlinien für die Gruppe beinhalten.

5. Gruppenserver (GLMS, PoC-Server) nach Anspruch 1, wobei jedes Gruppenprofil (G1-Profil, G2-Profil, GN-Profil) auf mindestens ein Element anwendbar ist, das ausgewählt ist aus: einer Benutzergruppe, einer Benutzerzugriffsliste und einer Benutzerkontaktliste.

6. Abonnentenserver (HSS), der Abonnentendaten für einen Abonnenten eines Netzbetreibers (MNO) enthält und zum Bereitstellen der Abonnentendaten an eine Netzentität (IMS-Core, CSCF, AS) geeignet ist, wobei der Abonnent ein Benutzer (UE) ist, wobei der Abonnentenserver Folgendes aufweist:
- eine erste Protokoll-Benutzeroberfläche (CxFE, ShFE) zur Kommunikation mit der Netzentität (IMS-Core, CSCF, AS);
und **gekennzeichnet dadurch, dass** er Folgendes beinhaltet:
- eine zweite Protokoll-Benutzeroberfläche (GhFE), die zur Kommunikation mit einem Gruppenserver (GLMS, PoC-Server) von Benutzergruppen, Benutzerkontaktlisten oder Benutzerzugriffslisten und zum Zwecke des Korrelierens von Benutzerprofilen (U1-Profil, U2-Profil, UM-Profil) in dem Abonnentenserver (HSS) mit Gruppenprofilen (G1-Profil, G2-Profil, GN-Profil) in dem Gruppenserver (GLMS, PoC-Server) geeignet ist, wobei das Gruppenprofil von Gruppenmitgliedern zu erfüllende Richtlinien beinhaltet und das Benutzerprofil von Gruppen, für die der Benutzer autorisiert ein Mitglied zu sein, zu erfüllende Richtlinien beinhaltet; und
- ein Benutzerauswertungsmodul (UEM) zum Prüfen, ob dem Benutzer (UE), in Abhängigkeit von Gruppen- und Benutzerprofilen, gestattet oder untersagt ist, mindestens ein Element zu erstellen, zu löschen oder zu modifizieren oder ein Mitglied mindestens eines Elements zu sein, wobei das Element ausgewählt ist aus: einer Benutzergruppe, einer Benutzerzugriffsliste und einer Benutzerkontaktliste.

7. Abonnentenserver (HSS) nach Anspruch 6, wobei die zweite Protokoll-Benutzeroberfläche (GhFE) ein Protokoll-Handler-Modul (U-PHM) zum Handhaben eines Protokolls umfasst, das zum Unterstützen von gruppenbezogenen Vorgängen geeignet ist, die auf mindestens ein Element zutreffen, das ausgewählt ist aus: einer Benutzergruppe, einer Benutzerzugriffsliste und einer Benutzerkontaktliste, und für mindestens einen Benutzer (Anfordernder, Mitglied).

8. Abonnentenserver (HSS) nach Anspruch 6, wobei die zweite Protokoll-Benutzeroberfläche (GhFE) ein Message-Parser-Modul (U-MPM) zum Handhaben von gruppenbezogenen Vorgängen und ein Unterstützungsfunktionsmodul (U-SFM) zum Steuern von lokalen Vorgängen umfasst.

9. Abonnentenserver (HSS) nach Anspruch 6, wobei jedes Benutzerprofil (U1-Profil, U2-Profil, UM-Profil) dazu eingerichtet ist, Folgendes zu umfassen: eine Benutzerkennung; Benutzerdaten unter Netzbetreiberprämissen; generische Gruppendaten, die Richtlinien beinhalten, die auf alle Gruppen für den Benutzer anwendbar sind; und spezifische Gruppendaten, die Richtlinien und eine Gruppenkennung für jede Gruppe beinhalten.

10. Abonnentenserver (HSS) nach Anspruch 9, wobei jedes Benutzerprofil (U1-Profil, U2-Profil, UM-Profil) dazu eingerichtet ist, weiterhin Folgendes zu umfassen: Abonnementdaten unter Netzbetreiberprämissen und allgemeine Richtlinien, die auf alle Gruppen für dieses Benutzerabonnement anwendbar sind.

11. Verfahren zum Steuern der Verwaltung in einem Gruppenserver (GLMS, PoC-Server) von Benutzergruppen, Benutzerkontaktlisten oder Benutzerzugriffslisten für einen Benutzer (Anfordernder, Mitglied), wobei die Gruppen, Kontaktlisten und Zugriffslisten eine Anzahl von Benutzern beinhalten, wobei jeder Benutzer (Anfordernder, Mitglied) ein Abonnent eines Netzbetreibers (MNO) ist, wobei das Verfahren einen Schritt beinhaltet:
- Empfangen einer Vorgangsanforderung (S-31) von dem Benutzer (Anfordernder), die auf mindestens einem Element einwirken soll, das ausgewählt ist aus: einer Benutzergruppe, einer Benutzerzugriffsliste und einer Benutzerkontaktliste, wobei der Vorgang ausgewählt ist aus: Erstellen, Löschen und Modifizieren des mindestens einen ausgewählten Elements;
und **gekennzeichnet dadurch, dass** es die folgenden Schritte beinhaltet:
- Korrelieren eines Gruppenprofils (G1-Profil, G2-Profil, GN-Profil), das dem mindestens einen ausgewählten Element entspricht, in dem Gruppenserver (GLMS, PoC-Server) mit mindestens einem Benutzerprofil (U1-Profil, U2-Profil, UM-Profil), das von einem Abonnentenserver (HSS) des Netzbetreibers (MNO) erhältlich ist, wobei das Gruppenprofil von Gruppenmitgliedern zu erfüllende Richtlinien beinhaltet und das Benutzerprofil von Gruppen, für die der Benutzer autorisiert ein Mitglied zu sein, zu erfüllende Richtlinien beinhaltet; und
- Prüfen, ob dem Benutzer, in Abhängigkeit von Gruppen- und Benutzerprofilen, gestattet oder untersagt ist, das mindestens eine ausgewählte Element zu erstellen, zu löschen oder zu modifizieren oder ein Mitglied des mindestens einen ausgewählten Elements zu sein.

12. Verfahren nach Anspruch 11, wobei der Schritt des Korrelierens eines Gruppenprofils mit mindestens einem Benutzerprofil einen Schritt des Vorbringens einer Vorgangsanforderung gegenüber dem Abonnentenserver (HSS) beinhaltet, die aus einer Gruppe von Vorgängen ausgewählt ist, die jeweils für Folgendes konzipiert sind: Erstellen oder Löschen einer Gruppe oder Liste für den Benutzer; Aufnehmen oder Streichen eines Benutzer in bzw. aus einer Gruppe oder Liste und Aktualisieren von Richtlinien für mindestens eine Gruppe oder Liste.

13. Verfahren nach Anspruch 12, wobei der Schritt des Korrelierens eines Gruppenprofils mit mindestens einem Benutzerprofil einen Schritt des Empfangens (S-36) von Informationen von dem Abonnentenserver (HSS) beinhaltet, die von einem Benutzerprofil erhältlich und im Schritt des Prüfens, ob dem Benutzer (Anfordernder, Mitglied) gestattet oder untersagt ist, den angeforderten Vorgang (S-31) durchzuführen, verwendbar sind.

14. Verfahren nach Anspruch 11, das weiterhin einen Schritt des Informierens des Abonnentenservers (HSS) über das Ergebnis eines beliebigen Vorgangs umfasst, der von dem Gruppenserver (GLMS, PoC-Server) in Verbindung mit einer Gruppe oder Liste an einem Benutzer durchgeführt wurde.

15. Verfahren nach Anspruch 11, das weiterhin einen Schritt des Bereitstellens von Benutzerkennungen unter Netzbetreiberprämissen bei einer Mitgliederabrufvorgangsanforderung umfasst, die von dem Abonnentenserver (HSS) empfangen wurde.

16. Verfahren zum Steuern der Verwaltung von Benutzergruppen, Benutzerkontaktlisten und Benutzerzugriffslisten für einen Benutzer (UE, Anfordernder, Mitglied) in einem Gruppenserver (GLMS, PoC-Server) von einem Abonnentenserver (HSS) aus, wobei der Benutzer ein Abonnent eines Netzbetreibers (MNO) ist, wobei das Verfahren einen Schritt umfasst:
- Enthalten von Abonnentendaten für den Benutzer (UE, Anfordernder, Mitglied) in dem Abonnentenserver (HSS) des Netzbetreibers (MNO);
und **gekennzeichnet dadurch, dass** es die Schritte beinhaltet:
- Korrelieren mindestens eines Benutzerprofils (U1-Profil, U2-Profil, UM-Profil) in dem Abonnentenserver (HSS) mit einem Gruppenprofil (G1-Profil, G2-Profil, GN-Profil), das von dem Gruppenserver (GLMS, PoC-Server) erhältlich ist, wobei das Gruppenprofil von Gruppenmitgliedern zu erfüllende Richtlinien beinhaltet und das Benutzerprofil von Gruppen, für die der Benutzer autorisiert ein Mitglied zu sein, zu erfüllende Richtlinien beinhaltet; und
- Prüfen, ob dem Benutzer (UE, Anfordernder, Mitglied), in Abhängigkeit von Gruppen- und Benutzerprofilen, gestattet oder untersagt ist, mindestens ein Element zu erstellen, zu löschen oder zu modifizieren oder ein Mitglied mindestens eines Elements zu sein, wobei das Element ausgewählt ist aus: einer Benutzergruppe, einer Benutzerzugriffsliste und einer Benutzerkontaktliste.

17. Verfahren nach Anspruch 16, wobei der Schritt des Korrelierens mindestens eines Benutzerprofils mit einem Gruppenprofil einen Schritt des Empfangens (S-32) einer Vorgangsanforderung von dem Gruppenserver (GLMS, PoC-Server) beinhaltet, die aus einer Gruppe von Vorgängen ausgewählt ist, die jeweils für Folgendes konzipiert sind: Erstellen oder Löschen einer Gruppe oder Liste für den Benutzer; Aufnehmen oder Streichen eines Benutzer in bzw. aus einer Gruppe oder Liste und Aktualisieren von Richtlinien für mindestens eine Gruppe oder Liste.

18. Verfahren nach Anspruch 17, wobei der Schritt des Korrelierens mindestens eines Benutzerprofils mit einem Gruppenprofil einen Schritt des Vorbringens von Informationen, die von dem Benutzer erhältlich sind, durch Netzentitäten (IMS-Core, CSCF, AS) und über Netzprotokolle (Cx, Sh), zum Aktualisieren des Benutzerprofils gegenüber dem Gruppenserver (GLMS, PoC-Server) beinhaltet.

19. Verfahren nach Anspruch 16, das weiterhin einen Schritt des Vorbringens einer Mitgliedsaktualisierungsvorgangsanforderung zum Aktualisieren des Status von Mitgliedern in einer Gruppe oder Liste gemäß dem Netzstatus von Benutzern gegenüber dem Gruppenserver (GLMS, PoC-Server) umfasst.

20. Verfahren nach Anspruch 16, das weiterhin einen Schritt des Vorbringens einer Mitgliederabrufvorgangsanforderung zum Abrufen von Mitgliedern einer Gruppe oder Liste, die durch die allgemeine Kennung identifiziert wurden, gegenüber dem Gruppenserver (GLMS, PoC-Server) umfasst.

## Revendications

1. Serveur de groupe ((GLMS, serveur PoC) approprié pour gérer des groupes, listes de contacts ou listes d'accès d'utilisateurs, chaque utilisateur (UE) étant un abonné d'un opérateur de réseau (MNO), le serveur de groupe ayant :
- un premier frontal de protocole (ImFE) en vue d'une communication avec l'utilisateur (UE) et approprié pour gérer au moins un élément sélectionné parmi : des groupes d'utilisateurs, des listes de contacts d'utilisateurs et des listes d'accès d'utilisateurs ;
et **caractérisé en ce qu'**il inclut :
- un second frontal de protocole (GhFE) approprié en vue d'une communication avec un serveur d'abonné (HSS) de l'opérateur de réseau (MNO) dans le but de corréler des profils de groupes (profil G1, profil G2, profil GN) dans le serveur de groupe (GLMS) avec des profils d'utilisateurs (profil U1, profil U2, profil UM) dans le serveur d'abonné (HSS), le profil de groupe incluant des conditions devant être remplies par des membres du groupe, et le profil d'utilisateur incluant des conditions devant être remplies par des groupes pour lesquels l'utilisateur autorise à être un membre ; et
- un module évaluateur de groupe (GEM) pour vérifier si l'utilisateur, en fonction des profils de groupe et d'utilisateur, est autorisé à, ou empêché de, créer, supprimer, modifier ou être un membre d'au moins un élément sélectionné parmi : un groupe d'utilisateur, une liste d'accès d'utilisateur et une liste de contact d'utilisateur.

2. Serveur de groupe (GLMS, serveur PoC) de la revendication 1, dans lequel le second frontal de protocole (GhFE) comprend un module gestionnaire de protocole (G-PHM) pour traiter avec un protocole approprié pour supporter des opérations relatives au groupe s'appliquant à au moins un élément sélectionné parmi : un groupe d'utilisateur, une liste d'accès d'utilisateur et une liste de contact d'utilisateur, et pour au moins un utilisateur (demandeur, membre).

3. Serveur de groupe (GLMS, serveur PoC) de la revendication 1, dans lequel le second frontal de protocole (GhFe) comprend un module analyseur syntaxique de message (G-MPM) pour traiter des opérations relatives au groupe, et un module de fonction de support (G-SFM) pour commander les opérations locales.

4. Serveur de groupe (GLMS, serveur PoC) de la revendication 1, dans lequel chaque profil de groupe (profil G1, profil G2, profil GN) est agencé afin de comprendre : un identifiant de groupe ; un propriétaire de groupe ; un nombre de données pour chaque membre utilisateur dans le groupe (membre 1, membre 2, membre N) qui inclut un identifiant d'utilisateur et des conditions d'utilisateur ; et des informations spécifiques au groupe qui incluent des conditions pour le groupe.

5. Serveur de groupe (GLMS, serveur PoC) de la revendication 1, dans lequel chaque profil de groupe (profil G1, profil G2, profil GN) est applicable à au moins un élément sélectionné parmi : un groupe d'utilisateur, une liste d'accès d'utilisateur et une liste de contact d'utilisateur.

6. Serveur d'abonné (HSS) conservant des données d'abonné pour un abonné d'un opérateur de réseau (MNO), et approprié pour fournir les données d'abonné à une entité de réseau (IMS core, CSCF, AS) dans laquelle l'abonné est un utilisateur (UE), le serveur d'abonné ayant :
- un premier frontal de protocole (C×FE, ShFE) en vue d'une communication avec l'entité de réseau (IMS core, CSCF, AS) ;
et **caractérisé en ce qu'**il inclut :
- un second frontal de protocole (GhFE) approprié en vue d'une communication avec un serveur de groupe (GLMS, serveur PoC) de groupes d'utilisateurs, listes de contacts d'utilisateurs ou listes d'accès d'utilisateurs, et dans le but de corréler des profils d'utilisateurs (profil U1, profil U2, profil UM) dans le serveur d'abonné (HSS) avec des profils de groupes (profil G1, profil G2, profil GN) dans le serveur de groupe (GLMS, serveur PoC), le profil de groupe incluant des conditions devant être remplies par des membres du groupe, et le profil d'utilisateur incluant des conditions devant être remplies par des groupes pour lesquels l'utilisateur autorise à être un membre ; et
- un module évaluateur de groupe (GEM) pour vérifier si l'utilisateur, en fonction des profils de groupe et d'utilisateur, est autorisé à, ou empêché de, créer, supprimer, modifier ou être un membre d'au moins un élément sélectionné parmi : un groupe d'utilisateur, une liste d'accès d'utilisateur et une liste de contact d'utilisateur.

7. Serveur d'abonné (HSS) de la revendication 6, dans lequel le second frontal de protocole (GhFE) comprend un module gestionnaire de protocole (U-PHM) pour traiter avec un protocole approprié pour supporter des opérations relatives au groupe s'appliquant à au moins un élément sélectionné parmi : un groupe d*'*utilisateur, une liste d'accès d'utilisateur et une liste de contact d'utilisateur, et pour au moins un utilisateur (demandeur, membre).

8. Serveur d'abonné (HSS) de la revendication 6, dans lequel le second frontal de protocole (GhFE) comprend un module analyseur syntaxique de message (U-MPM) pour traiter des opérations relatives au groupe, et un module de fonction de support (U-SFM) pour commander les opérations locales.

9. Serveur d'abonné (HSS) de la revendication 6, dans lequel chaque profil d'utilisateur (profil U1, profil U2, profil UM) est agencé de manière à comprendre : un identifiant d'utilisateur ; des données d'utilisateur dans les locaux de l'opérateur de réseau ; des données de groupe génériques qui incluent les conditions applicables à tous les groupes pour l'utilisateur ; et des données de groupe spécifiques qui incluent des conditions et un identifiant de groupe pour chaque groupe.

10. Serveur d'abonné (HSS) de la revendication 9, dans lequel chaque profil d'utilisateur (profil U1, profil U2, profil UM) est agencé afin de comprendre en outre : des données d'abonnement dans les locaux de l'opérateur du réseau ; et des conditions communes applicables à tous les groupes pour cet abonnement d'utilisateur.

11. Procédé de commande de la gestion dans un serveur de groupe (GLMS, serveur PoC) de groupes d'utilisateurs, de listes de contacts d'utilisateurs ou de listes d'accès d'utilisateurs pour un utilisateur (demandeur, membre), les groupes, listes de contacts et listes d'accès incluant un certain nombre d'utilisateurs, chaque utilisateur (demandeur, membre) étant un abonné d'un opérateur de réseau (MNO), le procédé incluant une étape consistant à :
- recevoir en provenance de l'utilisateur (demandeur) une demande d'opération (S-31) encline à fonctionner sur au moins un élément sélectionné parmi : un groupe d'utilisateur, une liste d'accès d'utilisateur et une liste de contact d'utilisateur, l'opération étant sélectionnée parmi : la création, la suppression et la modification d'au moins un élément sélectionné ;
et **caractérisé en ce qu'**il inclut les étapes consistant à :
- corréler un profil de groupe (profil G1, profil G2, profil GN) correspondant à au moins un élément sélectionné dans le serveur de groupe (GLMS, serveur PoC) avec au moins un profil d'utilisateur (profil U1, profil U2, profil UN) pouvant être obtenu depuis un serveur d'abonné (HSS) de l'opérateur de réseau (MNO), le profil de groupe incluant des conditions devant être remplies par les membres du groupe, et le profil d'utilisateur incluant des conditions devant être remplies par des groupes pour lesquels l'utilisateur autorise à être un membre ; et
- vérifier si l'utilisateur, en fonction des profils de groupe et d'utilisateur, est autorisé à, ou empêché de, créer, supprimer, modifier ou être un membre d'au moins un élément sélectionné.

12. Procédé de la revendication 11, dans lequel l'étape de corrélation d'un profil de groupe avec au moins un profil d'utilisateur inclut une étape consistant à soumettre au serveur d'abonné (HSS) une demande d'opération sélectionnée parmi un groupe d'opérations enclines afin de respectivement : créer ou supprimer un groupe ou une liste pour l'utilisateur ; inclure ou retirer un utilisateur dans un groupe ou une liste ; et mettre à jour des conditions pour au moins un groupe ou une liste.

13. Procédé de la revendication 12, dans lequel l'étape de corrélation d'un profil de groupe avec au moins un profil d'utilisateur inclut une étape de réception (S-36) en provenance du serveur d'abonné (HSS) d'informations pouvant être obtenues à partir d'un profil d'abonné et utilisables dans l*'*étape consistant à vérifier si l'utilisateur (demandeur, membre) est autorisé à, ou empêché d'exécuter l'opération demandée (S-31).

14. Procédé de la revendication 11, comprenant en outre une étape consistant à informer le serveur d'abonné (HSS) au sujet du résultat de n'importe quelle opération exécutée sur un utilisateur par le serveur de groupe (GMLS, serveur PoC) en liaison avec un groupe ou une liste.

15. Procédé de la revendication 11, comprenant en outre une étape consistant à fournir des identités d'utilisateurs dans les locaux de l'opérateur du réseau lorsqu'une demande d'opération d'extraction de membres est reçue en provenance du serveur d'abonné (HSS).

16. Procédé de commande à partir d'un serveur d'abonné (HSS) de la gestion dans un serveur de groupe (GLMS, serveur PoC) de groupes d'utilisateurs, listes de contacts d'utilisateurs et listes d'accès d'utilisateurs pour un utilisateur (UE, demandeur, membre), l'utilisateur étant un abonné d'un opérateur de réseau (MNO), le procédé comprenant une étape consistant à :
- conserver des données d'abonné pour l'abonné (UE, demandeur, membre) dans le serveur d'abonné (HSS) de l'opérateur de réseau (MNO) ;
et **caractérisé en ce que** il inclut les étapes consistant à :
- corréler au moins un profil d'utilisateur (profil U1, profil U2, profil UM) dans le serveur d'abonné (HSS) avec un profil de groupe (profil G1, profil G2, profil GN) pouvant être obtenu depuis le serveur de groupe (GLMS, serveur PoC), le profil de groupe incluant des coditions devant être remplies par les membres du groupe, et le profil d'utilisateur incluant des conditions devant être remplies par des groupes pour lesquels l'utilisateur autorise à être un membre ; et
- vérifier si l'utilisateur (UE, demandeur, membre), en fonction des profils de groupe et d'utilisateur, est autorisé à, ou empêché de, créer, supprimer, modifier ou être un membre d'au moins un élément sélectionné parmi : un groupe d*'*utilisateur, une liste d'accès d*'*utilisateur et une liste de contacts d'utilisateur.

17. Procédé de la revendication 16, dans lequel l'étape de corrélation d'au moins un profil d'utilisateur avec un profil de groupe inclut une étape de réception (S-32) en provenance du serveur de groupe (GLMS, serveur PoC) d'une demande d'opération sélectionnée parmi un groupe d'opérations enclines à respectivement : créer ou supprimer un groupe ou une liste ; inclure ou retirer un utilisateur dans un groupe ou une liste ; et mettre à jour des conditions pour au moins un groupe ou une liste.

18. Procédé de la revendication 17, dans lequel l'étape de corrélation d'au moins un profil d'utilisateur avec un profil de groupe inclut une étape consistant à soumettre au serveur de groupe (GLMS, serveur PoC) des informations pouvant être obtenues en provenance de l'utilisateur, via des entités de réseau (IMS core, CSCf, AS) et via des protocoles de réseau (Cs, Sh), pour mettre à jour le profil d'utilisateur.

19. Procédé de la revendication 16, comprenant en outre une étape consistant à soumettre au serveur de groupe (GLMs, serveur PoC) une demande d'opération de mise à jour de membres pour mettre à jour le statut des membres dans un groupe ou une liste en fonction du statut du réseau des utilisateurs.

20. Procédé de la revendication 16, comprenant en outre une étape consistant à soumettre au serveur de groupe (GMLS, serveur PoC) une demande d'opération d'extraction de membres pour extraire des membres d'un groupe ou d'une liste identifiés par un identifiant commun.
